# EUROPEAN PATENT APPLICATION

(11) **EP 3 581 299 A1**
(43) Date of publication of application: **18.12.2019**
(21) Application number: 19180077.0
(22) Date of filing: 13.06.2019
(51) Int. Cl.: B22F 3/105, B23K 15/00, B33Y 80/00, B33Y 10/00, B22F 5/00

(54) **HYBRID ADDITIVE MANUFACTURING METHODS**

(30) Priority: 15.06.2018 US 201816010263
(71) Applicant: Safran Landing Systems Canada Inc., Ajax, Ontario L1S 2G8 (CA)
(72) Inventor: LAN, Joseph, North York, Ontario M2K 2V6 (CA); TAM, Ryan, North York, Ontario M3B 1J9 (CA)
(74) Representative: Gevers Patents

(57) **Abstract**

Generally described, a hybrid additive manufacturing method may be used to produce complex parts using additive manufacturing technologies. The methods may include manufacturing one or more first portions of the part with a first additive manufacturing process, such as a powder bed fusion process using a metallic powder source material. The first portion of the part is then transferred to an operating bed of a second additive manufacturing process, such as a direct deposition process using a solid metallic source material. In this regard, the first additive manufacturing process is different from the second additive manufacturing process. Next, another portion of the part is manufactured, coupled to, and partially surrounding the first portion of the part using the second additive manufacturing process, portions of which may be machined with a tool to provide a finished part.

## Description

### BACKGROUND

Additive manufacturing is a type of three-dimensional (3D) printing where material is solidified in a pattern controlled by computer-aided design (CAD) instructions, and the part being produced is built on a layer-by-layer basis. Unlike a conventional machining process, where material is removed from stock to produce a part, additive manufacturing builds the part by adding layers, where each layer is solidified by a computer-controlled source, such as a laser or an electron-beam, before the tray moves incrementally to allow a new layer to be solidified adjacent the previous layer, or by adding solid stock material directly. Additive manufacturing is capable of producing parts from a wide variety of materials, including metals, polymers, and minerals.

One type of additive manufacturing, powder bed fusion, (e.g., Selective Laser Melting (SLM)), is used to produce high fidelity, complex metal parts. The powder bed fusion technique uses a high power-density laser or an electron-beam to melt and infuse a metallic powder into a solid. A wide variety of alloys are compatible with the powder bed fusion technique. To start the process, a 3D CAD model is broken into layers, typically on the order of 10 to 100 µm thick, and each layer is converted to a two-dimensional (2D) image for processing. During the additive manufacturing of the powder bed fusion technique, such as SLM, a thin layer of metal powder is applied to an operating plate or bed, and the laser traces the 2D image of a layer, melting and fusing the powdered metal together into the shape of the layer dictated by the CAD data. Then, the plate lowers by the thickness of a layer and the recently printed layer is covered by another thin layer of the metal powder and the laser traces the next image of a layer, melting and fusing the powdered metal together into the shape of the new layer and to the previously printed layer. In one aspect, parts made by the powder bed fusion technique generally lack strength, and the part size capability is constrained by the size of the plate and the amount of movement of the laser, which is relatively small compared to some other additive manufacturing processes.

Another type of additive manufacturing, direct deposition additive manufacturing, (e.g., Electron-Beam Melting using wire feed (EBM)), is also used to produce complex metal parts, but does not generally have as tight of a tolerance capability as the powder bed fusion technique. The direct deposition technique uses a heat source (e.g., an electron-beam) to generate heat to fuse the source material together by melting a metal rod, wire, or other solid source material. Direct deposition, like an EBM process, is able to produce metal parts with strength approximately equivalent to forged metal parts, but can only produce in near net shape (i.e., looser tolerances than some other additive manufacturing processes) and generally must be post-machined to gain a high tolerance part.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In accordance with one embodiment of the present disclosure, a hybrid additive manufacturing method is provided. The hybrid additive manufacturing method generally includes obtaining a metallic source material; manufacturing a first structure with a first additive manufacturing process using the metallic source material; placing the first structure on an operating bed of a second additive manufacturing process different from the first additive manufacturing process; manufacturing a second structure coupled to and partially surrounding the first structure with the second additive manufacturing process using another metallic source material; and machining a portion of the second structure with a tool to provide a finished part.

In accordance with another embodiment of the present disclosure, a hybrid additive manufacturing method is provided. The hybrid additive manufacturing method generally includes obtaining a metallic source material; manufacturing more than one internal portions with a first additive manufacturing process using the metallic source material; coupling the more than one internal portions together to produce a combined internal portion; placing the combined internal portion on an operating bed of a second additive manufacturing process different from the first additive manufacturing process; manufacturing an external portion coupled to and partially surrounding the combined internal portion with the second additive manufacturing process using another metallic source material; and machining an area of the external portion with a tool to provide a finished part.

In accordance with any of the embodiments described herein, the first additive manufacturing process may be a powder bed fusion process.

In accordance with any of the embodiments described herein, the powder bed fusion process may be a selective laser melting process using a metallic powder source material.

In accordance with any of the embodiments described herein, the second additive manufacturing process may be a direct deposition process.

In accordance with any of the embodiments described herein, the direct deposition process may be an electron-beam melting process using a solid metallic stock source material.

In accordance with any of the embodiments described herein, the hybrid additive manufacturing method may further include coupling more than one first structures to produce a combined structure prior to the step of manufacturing the second structure fused to and partially surrounding the combined structure with the second additive manufacturing process.

In accordance with any of the embodiments described herein, the coupling of the more than one first structures may be performed with one of an adhesive, a welding process, a fastener, an interlocking feature in the more than one first structures, and an additive manufacturing process.

In accordance with any of the embodiments described herein, the coupling of the more than one first structures may be performed using the second additive manufacturing process.

In accordance with any of the embodiments described herein, the first structure may be a lattice internal structure of the part.

In accordance with any of the embodiments described herein, the second structure may be an exoskeleton structure of the part.

In accordance with any of the embodiments described herein, the exoskeleton structure may include one or more of a mounting feature, a stiffening rib, and a lug produced by the second additive manufacturing process.

### DESCRIPTION OF THE DRAWINGS

The foregoing aspects and many of the attendant advantages of the present disclosure will become more readily appreciated as the same become better understood by reference to the following detailed description, when taken in conjunction with the accompanying drawings, wherein:
FIGURE 1 is a flow diagram describing a representative embodiment of a method for hybrid additive manufacturing in accordance with one aspect of the present disclosure;
FIGURE 2 is a flow diagram describing a representative embodiment of a method for hybrid additive manufacturing in accordance with another aspect of the present disclosure;
FIGURE 3 is a front, left, top perspective view of a representative embodiment of a part manufactured from a hybrid additive manufacturing method in accordance with another aspect of the present disclosure; and
FIGURE 4 is a cross-sectional view of the part of FIGURE 3.

### DETAILED DESCRIPTION

The detailed description set forth below in connection with the appended drawings, where like numerals reference like elements, are intended as a description of various embodiments of the present disclosure and are not intended to represent the only embodiments. Each embodiment described in this disclosure is provided merely as an example or illustration and should not be construed as precluding other embodiments. The illustrative examples provided herein are not intended to be exhaustive or to limit the disclosure to the precise forms disclosed.

In the following description, specific details are set forth to provide a thorough understanding of exemplary embodiments of the present disclosure. It will be apparent to one skilled in the art, however, that the embodiments disclosed herein may be practiced without embodying all of the specific details. In some instances, well-known process steps have not been described in detail in order not to unnecessarily obscure various aspects of the present disclosure. Further, it will be appreciated that embodiments of the present disclosure may employ any combination of features described herein.

The present application may include references to directions, such as "forward," "rearward," "front," "rear," "upward," "downward," "top," "bottom," "right hand," "left hand," "lateral," "medial," "distal," "proximal," "in," "out," "extended," etc. These references, and other similar references in the present application, are only to assist in helping describe and to understand the particular embodiment and are not intended to limit the present disclosure to these directions or locations.

The present application may also reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about," "approximately," "near," etc., mean plus or minus 5% of the stated value. For the purposes of the present disclosure, the phrase "at least one of A, B, and C," for example, means (A), (B), (C), (A and B), (A and C), (B and C), or (A, B, and C), including all further possible permutations when greater than three elements are listed.

The following description provides several examples that relate to methods for additive manufacturing. In these examples, several additive manufacturing processes are described in conjunction with hybrid additive manufacturing methods of the present disclosure. The present disclosure generally relates to hybrid additive manufacturing methods that are suitably used with any combination of individual additive manufacturing processes, and should not be construed as limited to the specific processes referenced herein. Embodiments of the present disclosure are suitable for use with any powder bed or direct deposition technology (additive manufacturing) using the melting of rods/wire/powder. In some embodiments, the methods include optional post-machining. In these regards, the methods of the present disclosure are suitable for use with hybridization of any additive manufacturing process.

As previously noted, each type of additive manufacturing possesses various advantages and disadvantages relating to processing speed, part size and weight, geometric freedom, aerodynamic properties, finished material strength, material and machine cost, availability of source materials, machine service intervals, machine size, part tolerance capabilities, and other considerations. For example, some additive manufacturing processes produce parts quickly and cheaply, but with rough manufacturing tolerances and low material strength. Other additive manufacturing processes can be slower to produce a part, or more expensive to operate and maintain, but produce parts with closer tolerances and higher strength. In some examples, a part may include areas or features that are best suited for one additive manufacturing process, while other areas or features of the same part are best suited for a different additive manufacturing process. In these examples, the hybrid additive manufacturing methods of the present disclosure are suitable to allow an engineer to design different aspects within a part to take advantage of the strengths of each additive manufacturing process; and mitigate the weaknesses to produce parts having the requisite quality, strength, and finish designed by the designer; while reducing cost, weight, and processing time to increase throughput.

As noted above, powder bed fusion, such as by Selective Laser Melting (SLM), can be used to produce high fidelity, complex metal parts having relatively tight tolerancing, and a wide variety of alloys are compatible with the powder bed fusion process. However, parts made by the powder bed fusion technique generally lack strength in certain aspects of the part, and the part size capability is constrained by the size of the plate (or material/powder operating bed) and the freedom of movement within the operating envelope of the laser. In some embodiments of the hybrid additive manufacturing method, the powder bed fusion process is suited to produce complex, non-solid structure of a component, such as internal lattice, honeycomb, or other suitable internal structure configurations, exterior structures that share these characteristics, etc. In the ensuing description, the powder bed fusion process is referred generally as an SLM process; however, for the purposes of this disclosure, the use of the SLM process should be construed to represent any powder bed fusion process.

Differing from the SLM process, direct deposition, such as Electron-Beam Melting using a wire feed (EBM), is another additive manufacturing process used to produce complex metal parts using a heat source, (e.g., electron-beam) to generate heat and melt a solid metal stock (e.g., wire or rod) into a part. The direct deposition process does not generally have as tight of a tolerance capability as the powder bed fusion process. The direct deposition process creates parts in an additive manner, directly depositing a solid metal stock. The direct deposition process is able to produce metal parts with strength approximately equivalent to forged metal parts, but can only produce in near net shape, and must be post-machined to gain a higher tolerance and improved surface finish. In some embodiments of the hybrid additive manufacturing method, the direct deposition process is suitable to produce larger parts. In the ensuing description, the direct deposition additive manufacturing process is referred generally as an EBM process; however, for the purposes of this disclosure, the use of the EBM process should be construed to represent any direct deposition additive manufacturing process.

In comparison of the two exemplary additive manufacturing processes, the inventor of the claimed subject matter recognized that the advantages of each process can be applied to areas, components, or features of parts to benefit from each process. Such methodologies and technologies can give the designer more flexibility and options in designing the part. In one representative example, aerospace components generally include complex structures with very tight tolerance, strength, and weight requirements. In the ensuing description, one example of a group of aerospace components-aerospace landing gear structural members-will be used. It should be noted that the use of aerospace landing gear parts herein is exemplary, and does not limit the scope of the present disclosure. The hybrid additive manufacturing methods disclosed herein are suitable for use with any part benefiting from the hybridization of different additive manufacturing processes.

For the example of a landing gear structural member, optimizing strength, weight, and acoustic properties is critical, among consideration of other aspects and properties. In some examples of parts produced by aspects of the present disclosure, such landing gear structural members may be of a complex shape with an infill structure, such as a lattice or honeycomb. The configuration of certain landing gear structural members is such that a single additive manufacturing process would not produce an optimized resulting part. For example, the internal structure of the parts would not be suitable for the EBM process, while the high-strength requirements for the shell and other outer components would not be suitable for the SLM process.

Given the general result where EBM-produced parts require post-machining to achieve higher tolerance and improved surface finish, in some embodiments, EBM is suitable for producing sections of a part accessible by machines, such as the tool of a mill or lathe, or other computer-aided tool, to perform finish work. In these embodiments, EBM is suited to produce a high strength shell of a simpler shape that can be post-machined. In contrast, since the SLM process is capable of closer tolerances, but has a lower strength than an EBM-produced component, in some embodiments, SLM is suitable for producing internal sections of a part where higher tolerances are beneficial, such as the internal structure, as noted above.

Some examples of technical difficulties with additive manufacturing of landing gear structural components include the size capabilities and material property limitations of SLM technology. In contrast, EBM is a more economical process and has improved finished material strength properties over SLM, but does not allow full realization of the advantages of additive manufacturing, e.g, lightweight and complex structural components. The hybrid additive manufacturing methods disclosed herein generally include the application of the advantages of each of SLM and EBM to different areas or features of the part to allow structural landing gear components to be produced using additive manufacturing. Parts produced using the methods disclosed herein provide substantial advantages in weight and aeroacoustic properties, while optimizing cost considerations and reducing production time. Certain parts manufactured using the embodiments of the methods of the present disclosure would not be possible traditional methods.

Embodiments of the methods of the present disclosure are suitable for applying one additive manufacturing process to a section, area, or feature of a part, while applying another additive manufacturing process to a different section, area, or feature of the part. In some embodiments, the methods disclosed herein are suitable for the use of two additive manufacturing processes to produce a part. In other embodiments, the methods disclosed herein are suitable for the use of more than two additive manufacturing processes to produce a part. In any of these embodiments, the order in which the additive manufacturing processes are used may be changed without departing from the scope of the present disclosure.

In one embodiment, the hybrid additive manufacturing method uses SLM to produce the internal structure of an aerospace landing gear component, and EBM is used to produce a high-strength external shell, referred to as an exoskeleton, which may include additional features such as mounting points, structural components, or other features. The internal structure produced by the SLM process may advantageously utilize the tight tolerance capabilities and low weight of parts produced by the SLM process, allowing for intricate patterns in the lattice structure. In some embodiments, higher strength is required in the exoskeleton to meet the strength requirements of the part. In this regard, the EBM process provides a higher strength finished part where access for finish machining is more readily available.

The internal structure of a part manufactured using the methods of the present disclosure may be manufactured by SLM in several pieces, or building blocks (not shown). In some embodiments, the building blocks may be manufactured using an SLM process having a powder operating plate or bed. The building blocks may be modular such that they can be arranged in patterns to provide the internal structure required for the part. The modularity of the building blocks allows for finished parts of a larger size than the manufacturing envelope of the SLM process. In this regard, a building block may be manufactured with a design allowing joining with other building blocks to form a larger, combined internal structure. In some embodiments, the joining of the building blocks created by the SLM process is accomplished using the EBM process. In this regard, the material of the building blocks may be fused together by the electron-beam of the EBM process without adding material, or the EBM process may fuse new material to the material of the building block to join the blocks together. In other embodiments, the joining of the building blocks created by the SLM process is accomplished by any joining method, such as adhesive, welding, fastening, interlocking features, or the like.

In some embodiments, after the building blocks are joined together to form the combined internal structure of a part, the EBM process provides further features to the part, such as a structural shell, or exoskeleton, built at least partially around and in contact with the building blocks to give the part an external shape, structural rigidity, mounting points, interfacing features, stiffening ribs, and other designed components of the part. In some embodiments, the EBM process is performed using direct deposition additive manufacturing. As with the joining of the building blocks, the EBM process can couple, or fuse, the structural shell of the part to the building blocks.

In one embodiment of a part produced using the methods disclosed herein, an aerodynamic side brace for a landing gear is manufactured to resemble an airfoil shape with end lugs for attachment points to other components. In these embodiments, the airfoil-shaped side brace includes sections of honeycomb or lattice structure building blocks produced using an SLM process. The honeycomb or lattice structure building blocks are produced layer-by-layer in the SLM machine. Next, the blocks are coupled together and surrounded by a shell, or exoskeleton, formed using an EBM process. Additional features are added to the exoskeleton by the EBM machine. In this exemplary embodiment, additional features include end lugs used to mount the airfoil-shaped side brace to other components, structural spars, and stiffening ribs. The end lugs, spars, and stiffening ribs are added to the exoskeleton using the EBM process. Sections of the exoskeleton and additional features requiring tighter tolerances can be post-machined to final dimensions. In some embodiments an aerodynamic side brace is required to improve aeroacoustics. In other embodiments, a traditional I-beam shape may be used for the internal structure. In further embodiments, the exoskeleton may cover only portions of the internal structure.

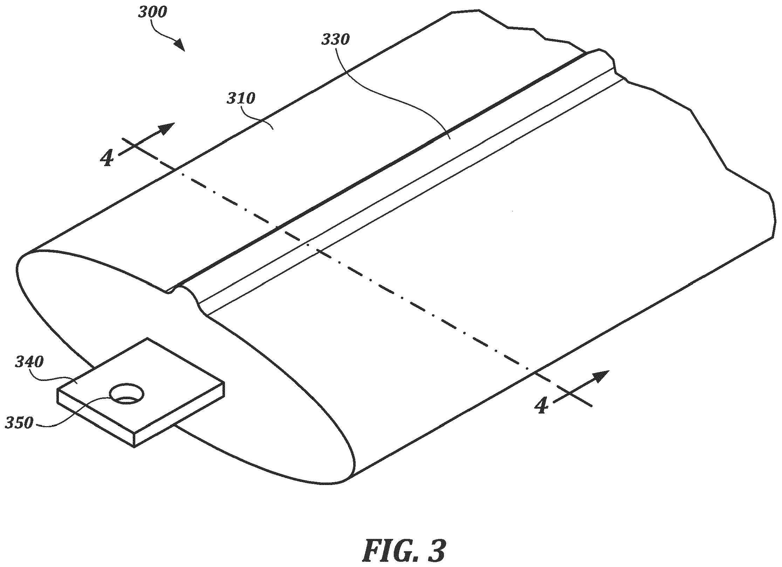

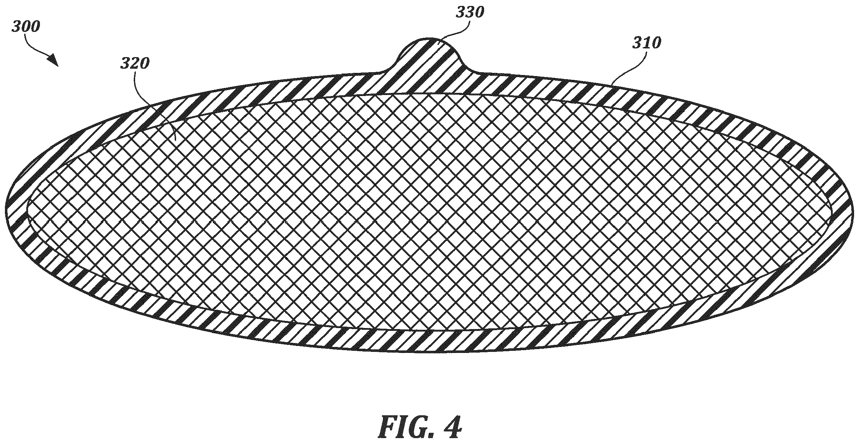

Turning initially to FIGURES 3 and 4, an embodiment of a part 300 manufactured using a hybrid additive manufacturing method of the present disclosure is shown. The part 300 generally includes a shell 310, a stiffening rib 330, and a lug 340 having a mounting hole 350 for mounting the part 300 to another component. As shown in FIGURE 4, in some embodiments, an internal structure 320 is positioned internal to the shell 310 to provide additional characteristics to the part 300, as described above.

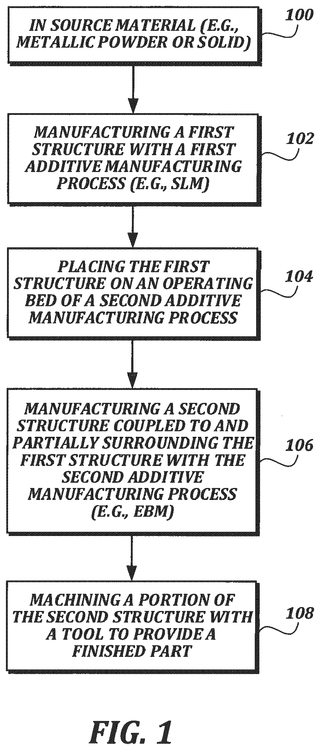

Turning to FIGURE 1, one representative embodiment of a method of hybrid additive manufacturing of a part, such as a landing gear part, is shown. The method generally includes obtaining a metallic source material; manufacturing a first (internal) structure with a first additive manufacturing process using the metallic source material; placing the first structure on an operating bed of a second additive manufacturing process different from the first additive manufacturing process; manufacturing a second (external) structure coupled to and partially surrounding the first structure with the second additive manufacturing process using another metallic source material; and machining a portion of the second structure with a tool to provide a finished part. In some embodiments, the step of manufacturing the first structure is performed using a selective laser melting process. In some embodiments, the step of manufacturing the second structure is performed using an electron-beam melting additive manufacturing process. In some of these embodiments, the metallic source material for the selective laser melting process is a metallic powder source material. In other embodiments, the metallic source material for the electron-beam melting additive manufacturing process is a solid metallic source material.

In block 100, a source material, such as a solid or powder metal, is obtained. The source material is used in the additive manufacturing of the part, and is suitably any metallic source material. In some embodiments, the source material is used with the SLM process and comprises a metallic powder. The laser of the SLM heats the powder to solidify it in a pattern defined by CAD data, and builds the part on a layer-by-layer basis.

In block 102, a first (internal) structure is manufactured using a first additive manufacturing process. In some embodiments, the first additive manufacturing process is an SLM process using the metallic powder source material. In some embodiments, the first structure is a lattice internal structure.

In block 104, the first structure is placed on an operating bed of a second additive manufacturing process. In these embodiments, the second additive manufacturing processes different than the first additive manufacturing process. In some embodiments, the operating bed of the second additive process is shared with the operating bed of the first additive manufacturing process. In other embodiments with separate operating beds, the first structure may be transported between the operating beds manually, automated, or a combination thereof.

In block 106, a second (external) structure is manufactured using a second additive manufacturing process. In some embodiments, the second additive manufacturing process is an EBM process. In these embodiments, the second structure is coupled to the first structure using the EBM process. In some embodiments, the source material for the EBM process is a solid metallic source material. In some embodiments, the second structure is an exoskeleton structure. In some of these embodiments, the exoskeleton includes a mounting feature such as a lug, stud, etc. In other embodiments, the exoskeleton includes a stiffening feature such as a rib.

In block 108, a portion of the second structure is machined with a tool providing a finished part. The step of machining with a tool may provide improved finish tolerancing to certain features of the part, such as a mounting location, a lug, a clearance feature, or the like.

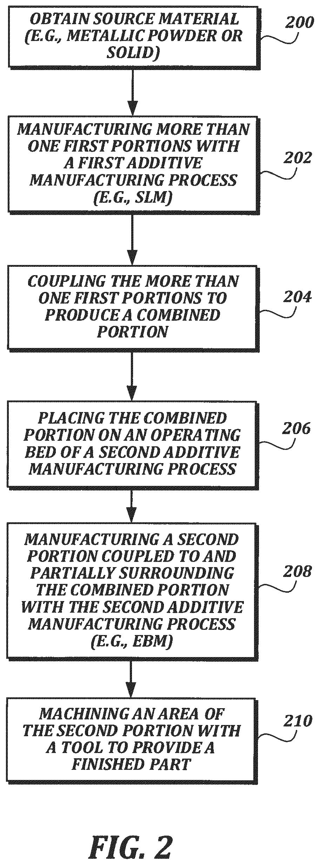

Turning to FIGURE 2, another representative embodiment of a method of hybrid additive manufacturing of a part, such as a landing gear part, is shown. The method generally includes obtaining a metallic source material; manufacturing more than one first (internal) portions with a first additive manufacturing process using the metallic source material; coupling the more than one first portions to produce a combined portion; placing the combined portion on an operating bed of a second additive manufacturing process different from the first additive manufacturing process; manufacturing a second (external) portion coupled to and partially surrounding the combined portion with the second additive manufacturing process using another metallic source material; and machining an area of the second portion with a tool to provide a finished part.

In some embodiments, the coupling of the more than one first portions is performed with one of an adhesive, a welding process, a fastener, an interlocking feature in the more than one first structures/portions, and an additive manufacturing process. In other embodiments, the coupling of the more than one first portions to produce a combined portion is performed using the second additive manufacturing process. In some of these embodiments, the metallic source material for the first additive manufacturing process is a metallic powder source material. In other embodiments, the metallic source material for the second additive manufacturing process is a solid metallic source material.

In block 200, a source material, such as a solid or powder metal, is obtained. The source material is used in the additive manufacturing of the part, and is suitably any metallic source material. In some embodiments, the source material is used with the SLM process and comprises a metallic powder. The laser of the SLM heats the powder to solidify it in a pattern defined by CAD data.

In block 202, more than one first (internal) portion is manufactured using a first additive manufacturing process. In some embodiments, the first additive manufacturing process is an SLM process using the metallic powder source material. In some embodiments, the first portion is a lattice internal structure.

In block 204, the one or more first (internal) portions are coupled to provide a combined portion. In some embodiments, the more than one first portions is performed with one of an adhesive, a welding process, a fastener, an interlocking feature in the more than one first portions, and an additive manufacturing process. In other embodiments, coupling of the more than one first portions to produce a combined portion is performed using the second additive manufacturing process.

In block 206, the combined portion is placed on an operating bed of a second additive manufacturing process. In these embodiments, the second additive manufacturing processes different than the first additive manufacturing process. In some embodiments, the operating bed of the second additive process is shared with the operating bed of the first additive manufacturing process. In other embodiments with separate operating beds, the first structure may be transported between the operating beds manually, automated, or a combination thereof.

In block 208, a second (external) portion is manufactured using a second additive manufacturing process. In some embodiments, the second additive manufacturing process is an EBM process. In these embodiments, the second portion is coupled to the combined structure using the EBM process. In some embodiments, the source material for the EBM process is a solid metallic source material. In some embodiments, the second portion is an exoskeleton structure. In some of these embodiments, the exoskeleton includes a mounting feature, such as a lug, stud, etc. In other embodiments, the exoskeleton includes a stiffening feature, such as a rib.

In block 210, an area of the second portion is machined with a tool provided finished part. The machining with a tool may provide finish tolerancing to certain features of the part, such as a mount, a lug, a clearance feature, or the like.

The principles, representative embodiments, and modes of operation of the present disclosure have been described in the foregoing description. However, aspects of the present disclosure, which are intended to be protected, are not to be construed as limited to the particular embodiments disclosed. Further, the embodiments described herein are to be regarded as illustrative rather than restrictive. It will be appreciated that variations and changes may be made by others, and equivalents employed, without departing from the spirit of the present disclosure. Accordingly, it is expressly intended that all such variations, changes, and equivalents fall within the spirit and scope of the present disclosure as claimed.

## Claims

1. A hybrid additive manufacturing method, comprising:
obtaining a metallic source material;
manufacturing a first structure with a first additive manufacturing process using the metallic source material;
placing the first structure on an operating bed of a second additive manufacturing process different from the first additive manufacturing process;
manufacturing a second structure coupled to and partially surrounding the first structure with the second additive manufacturing process using another metallic source material; and
machining a portion of the second structure with a tool to provide a finished part.

2. The method according to Claim 1, wherein the first additive manufacturing process is a powder bed fusion process.

3. The method according to Claim 2, wherein the powder bed fusion process is a selective laser melting process using a metallic powder source material.

4. The method according to any one of Claims 1, 2 or 3, wherein the second additive manufacturing process is a direct deposition process.

5. The method according to Claim 4, wherein the direct deposition process is an electron-beam melting process using a solid metallic stock source material.

6. The method according to any one of the preceding claims, further comprising
coupling more than one first structures to produce a combined structure prior to the step of manufacturing the second structure fused to and partially surrounding the combined structure with the second additive manufacturing process.

7. The method of Claim 6, wherein the coupling of the more than one first structures is performed with one of an adhesive, a welding process, a fastener, an interlocking feature in the more than one first structures, and an additive manufacturing process.

8. The method according to Claim 6, wherein the coupling of the more than one first structures is performed using the second additive manufacturing process.

9. The method according to any one of the preceding claims, wherein the first structure is a lattice internal structure of the part.

10. The method according to any one of the preceding claims, wherein the second structure is an exoskeleton structure of the part.

11. The method according to any one of Claim 10, wherein the exoskeleton structure includes one or more of a mounting feature, a stiffening rib, and a lug produced by the second additive manufacturing process.

12. The method according to any one of Claims 1, 2, 3, 4 or 5, wherein
said manufacturing a first structure with a first additive manufacturing process using the metallic source material includes making a plurality of internal portions with the first additive manufacturing process using the metallic source material and coupling the plurality of internal portions together to produce the first structure; and
the second structure is external to the first structure.

13. The method of Claim 12, wherein the coupling of the plurality of internal portions is performed with one of an adhesive, a welding process, a fastener, an interlocking feature in the plurality of first portions, and an additive manufacturing process.

14. The method according to Claim 12, wherein the coupling of the plurality of internal portions is performed using the second additive manufacturing process.

15. The method according to any one of Claims 12, 13 or 14, wherein the first structure is a lattice structure of the part and the second structure is an exoskeleton of the part.
